# EUROPEAN PATENT SPECIFICATION

(11) **EP 3 732 372 B1**
(45) Date of publication and mention of the grant of the patent: **13.11.2024**
(21) Application number: 18897731.8
(22) Date of filing: 21.12.2018
(51) Int. Cl.: F03D 17/00, F03D 80/00

(54) **WIND TURBINE BLADE DEFLECTION MONITORING SYSTEM AND METHOD FOR THE MONITORING OF WIND TURBINE BLADE DEFLECTION**
SYSTEM UND VERFAHREN ZUR ÜBERWACHUNG VON WINDTURBINENSCHAUFELDURCHBIEGUNG
SYSTÈME DE SURVEILLANCE DE DÉPLACEMENT DE PALE D'ÉOLIENNE ET PROCÉDÉ DE SURVEILLANCE DE DÉPLACEMENT DE PALE D'ÉOLIENNE

(30) Priority: 30.12.2017 DK PA201700753
(43) Date of publication of application: 04.11.2020
(73) Proprietor: Stiesdal A/S, 5000 Odense C (DK)
(72) Inventor: STIESDAL, Henrik, 5000 Odense (DK); HEDEVANG, Arne, 7000 Fredericia (DK); SCHIBSBYE, Karsten, 7000 Fredericia (DK)
(74) Representative: Patrade A/S
(86) International application number: PCT/DK2018/050420
(87) International publication number: WO 2019/129337

(56) References cited:
- EP-A1- 2 734 816
- EP-A2- 2 202 406
- EP-A2- 2 202 406
- EP-A2- 2 693 049
- EP-A2- 2 778 395
- EP-A2- 2 778 395
- EP-B1- 2 734 816
- US-A1- 2008 101 930
- US-A1- 2013 110 414

## Description

### Field of the Invention

The present invention relates to a system and a method for the monitoring of wind turbine blade deflection.

The wind turbine blade deflection monitoring system comprises two or more sensors mounted in the wind turbine blade.

### Background of the Invention

Wind turbines have long been used to generate electricity from the wind. The most common type of wind turbine is the horizontal axis turbine. Horizontal axis wind turbines typically have a rotor comprising two or three wind turbine blades attached to a hub. The hub is mounted on a shaft that rotates about an approximately horizontal axis. The shaft is connected to a generator, either directly or through a gearbox, and when the rotor is set in motion by the wind the generator rotates and generates electricity. The hub is provided at a nacelle being arranged at the top of a wind turbine tower.

In the following the feature wind turbine blade will be denoted as blade and the feature wind turbine tower will be denoted as tower.

As the turbine size and blade length increase, blade deflection becomes a more important issue. In particular, the tip of the blade is typically lighter and more deformable than the rest of the blade body, and will bend more than the blade body itself. As the blade rotates past the tower at its lowest point, there is a risk that bending of the tip will cause it to come into contact with the tower, causing damage both to the tower and the blade, and some large wind turbines have been known to experience tower strikes in which a blade deflects to the point that it strikes the tower and is destroyed.

Additionally, as blades are constructed to withstand bending of the blade up to a design limit, if the bending exceeds this limit, damage to the blade could ensue as the blade is exposed to excessive strains.

Furthermore, many wind turbine manufacturers are reducing the cost of their wind turbines by making the blades lighter weight. This results in a more flexible blade, which leads to a higher risk of large deflections and potentially tower strikes, and higher risk of structural damage to the blades as a result of excessive strains.

Modern wind turbines have several means of regulation, including adjustment of the blade pitch angle and adjustment of the rotor speed.

The forces acting on an operational wind turbine blade are a function of wind speed, wind direction relative to the rotor axis, blade pitch angle and rotor speed.

Based on aerodynamic and structural calculations it is possible to estimate the average forces at different radial positions of the blade and thereby the average blade deflection at different wind speeds, but due to the turbulent nature of the wind and the dynamic response of the wind turbine it is generally not possible to estimate the actual blade deflection at any given point in time.

Therefore, in order to have sufficient safety margin against tower strikes, blades are generally dimensioned based on "worst case" combinations of mean wind, turbulence, off-axis wind direction, etc.

Since the blade pitch angle and the rotor speed can be adjusted freely, it is possible to implement control systems that limit the blade deflection, provided that the actual blade deflection at a given point in time can be determined.

Various sensor types have been suggested to provide the sensor input for the determination of blade deflection at a given point in time. Such sensors tend to have each their advantages and disadvantages.

Classical resistive strain gauges provide information about blade strain from which deformation can be derived. However, resistive strain gauges tend to have limited lifetime in wind turbine applications and are prone to drifting.

Optical strain gauges can be made with longer lifetime, but tend to be vulnerable to handling damage.

Accelerometers are very robust but in order to provide position information the sensor output needs to be integrated twice, which unavoidably introduces drift.

GPS sensors can provide direct position information but require antennas and are therefore vulnerable to lightning damage.

EP 2202 406 relates to a wind turbine including at least one global positioning sensor for determining a deflection of a component of the wind turbine.

US 2008/0101930 relates to a wind turbine with a sensor that measures the out - of - plane deflection of the blades and a controller that uses the signal from the sensor to determine the risk of a tower strike.

EP 2778 395 relates to a method for reducing loads acting on a wind turbine in response to transient wind conditions.

Magnetic sensors can also provide direct position information but require regular calibration.

### Object of the Invention

It is the object of the present invention to provide a system and a method for the monitoring of wind turbine blade deflection in which overcomes the above drawbacks and make it possible to provide a possible to estimate the actual blade deflection at a given point in time in order to make it possible to provide for a control action to be taken to avoid a strike between the wind turbine blade and a wind turbine tower, while not being vulnerable to lightning damage.

### Description of the Invention

According to the present invention this object is obtained with a wind turbine blade deflection monitoring system comprising two or more sensors mounted in the wind turbine blade as mentioned by way of introduction and which is peculiar in that the sensors are located at different radial positions along the blade, that each sensor comprises an accelerometer and/or a magnetic transducer in addition to any other transducers included in the sensor, that the sensors are provided with connectors, that the sensors and their connectors are jointly encapsulated in a joint encapsulation and that the sensors, their connectors and a joint encapsulation are covered with a metallic shield.

The method according to the present invention for the monitoring of wind turbine blade deflection, is peculiar in that it comprises the steps of
estimating the variations around the average wind turbine blade deflection based on the signals from a set of sensors installed in the wind turbine blade,
estimating the average wind turbine blade deflection from calculations based on a combination of two or more of the measured values of wind speed, power output, blade pitch angle, rotor speed and/or orientation of the rotor relative to the wind direction, and
estimating the absolute value of the blade deflection by adding the estimate of the variations around the average wind turbine blade deflection with the estimate of the average wind turbine blade deflection.

The sensors are provided as a set of sensors which are mounted in the blade in order to detect variations in the blade deflection.

The set of sensors and its conductors, preferably in a protective cover, is mounted within an electrically shielding encapsulation I n form of a metallic shield.

This encapsulation may act as a primary or secondary down-conductor in the lightning protection system of the blade, or it may simply ensure a protected environment for the sensors.

The sensor signals may be converted to provide position information. In case of accelerometer signals this may be carried out by double integration.

Due to the tendency of doubly integrated accelerometer signals to drift, the position information derived from the sensor will typically only lead to an estimate of the variations around an average position value, e.g. a deflection relative to an unloaded position of the blade.

Combining the estimate of the variations around an average deflection with an estimated average value of the blade deflection based on wind speed and/or power output, blade pitch angle, rotor speed and possibly other parameters will yield an estimate of the absolute blade deflection.

The estimated absolute blade deflection may be compared to the desired operating envelope in which a tower strike and/or excessive strains in the blade will not occur. If the blade deflection approaches the edge of the operating envelope and a tower strike or an overloading of the blade becomes possible, then a control action may be taken to avoid the strike. This control action is controlled by a control system which is connected with the sensors and is based on signals from the sensors.

According to a further aspect the invention is peculiar in that the set of sensors mounted in a blade comprises one or more accelerometers, one or more gyros, and/or one or more magnetic field sensors.

According to a further aspect the invention is peculiar in that the sensors also comprises sensors for the measurement of temperature, pressure, etc. which supplement the set of sensors.

According to a further aspect the invention is peculiar in that the set of sensors is combined with a set of electrical conductors being connected to the connectors of the sensors to form a long strip or belt of roughly uniform width. This long strip can be placed inside the blade, either during manufacturing or as a retrofit.

According to a further aspect the invention is peculiar in that the individual sensors are be manufactured as integrated units comprising the desired types of sensors, e.g. an accelerometer, a magnetic sensor, a gyro, a temperature sensor and a pressure sensor, mounted in a common housing. The housing may be fitted with leads that are readily connected to single conductors.

According to a further aspect the invention is peculiar in that the conductors are be in the form of a twisted pair of power supply leads and a twisted pair of signal transmission leads. The conductors may be arranged with the twisted pair of power supply leads on one side of the sensor and the twisted pair of signal transmission leads on the other side of the sensor.

The sensors may be fitted to conductors in a manufacturing process that positions the sensors at pre-determined intervals along the conductors.

The intervals between the sensors may be adjusted to fit a particular type of blade, or they may simply be entirely regular, allowing for continuous manufacturing of "endless" belts of conductors fitted with sensors at regular intervals.

According to a further aspect the invention is peculiar in that the set of sensors and its conductors are encapsulated in a protective cover. The protective cover may provide the set of sensors with robustness and/or protection against moisture. The protective cover may be a fiber reinforced plastic, e.g. in the form of one or more prepreg tapes that are pressed and cured on both sides of the sensor system comprising the sensors and the conductors to form a strip or belt.

The sensor arrangement may in combination with the control system include means for the automatic calibration of the sensors.

According to a further aspect the invention is peculiar in that the sensor signals are sampled at regular intervals. The signals are converted to provide a physical representation of the accelerations, gyroscopic forces and/or magnetic fields experienced by the sensors.

According to a further aspect the invention is peculiar in that the acceleration signals are converted by double integration to provide position information. Due to the tendency of doubly integrated accelerometer signals to drift, the position information derived from the sensor will typically only lead to an estimate of the variations around an average position value, e.g. a deflection relative to an unloaded position of the blade. These estimates of the position variations around an average position value, e.g. a deflection relative to an unloaded position of the blade, are then combined with estimated average value of the blade deflection based on wind speed and/or power output, blade pitch angle, rotor speed and possibly other parameters to yield an estimate of the absolute blade deflection.

According to a further aspect the invention is peculiar in that the estimated absolute blade deflection is compared to the desired operating envelope in which a tower strike and/or excessive strains in the blade will not occur.

In case the blade deflection approaches the edge of the operating envelope and a tower strike or an overloading of the blade becomes possible, a control action is taken to avoid the strike and/or prevent the overloading.

According to a further aspect the invention is peculiar in that the sensor signals are automatically calibrated. This calibration may take place when the wind turbine is rotating slowly, when idling in low wind or after shutdown in high wind.

### Description of the Drawing

The invention will be described in connection with the accompanying drawing in which
- Fig. 1: shows a wind turbine,
- Fig. 2: shows the location of a sensor set in a wind turbine blade,
- Fig. 3: shows a sensor set arranged inside a wind turbine blade in parallel to the down conductor of the lightning protection system, and
- Fig. 4: shows a section of a sensor set encapsulated in a protective cover.

### Detailed Description of the Invention

An example of a system for determining the blade deflection of a wind turbine blade will now be described for the purposes of illustration.

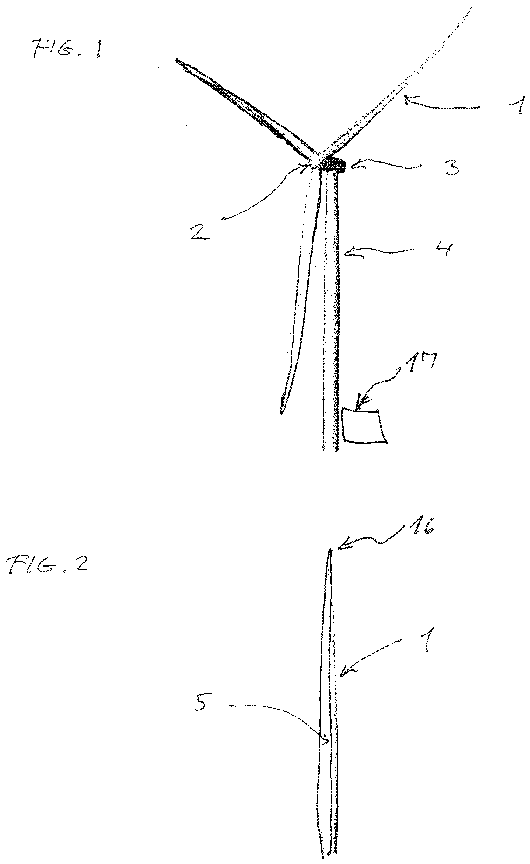

Figure 1 shows a horizontal-axis wind turbine. A blade 1 is mounted to a rotor hub 2, which is supported by a bearing in a nacelle 3. The whole rotor-nacelle-assembly is mounted on a tower 4.

Figure 2 shows a wind turbine blade 1 with a sensor set according to the invention. The sensor set 5 is mounted in the longitudinal axis of the blade 1.

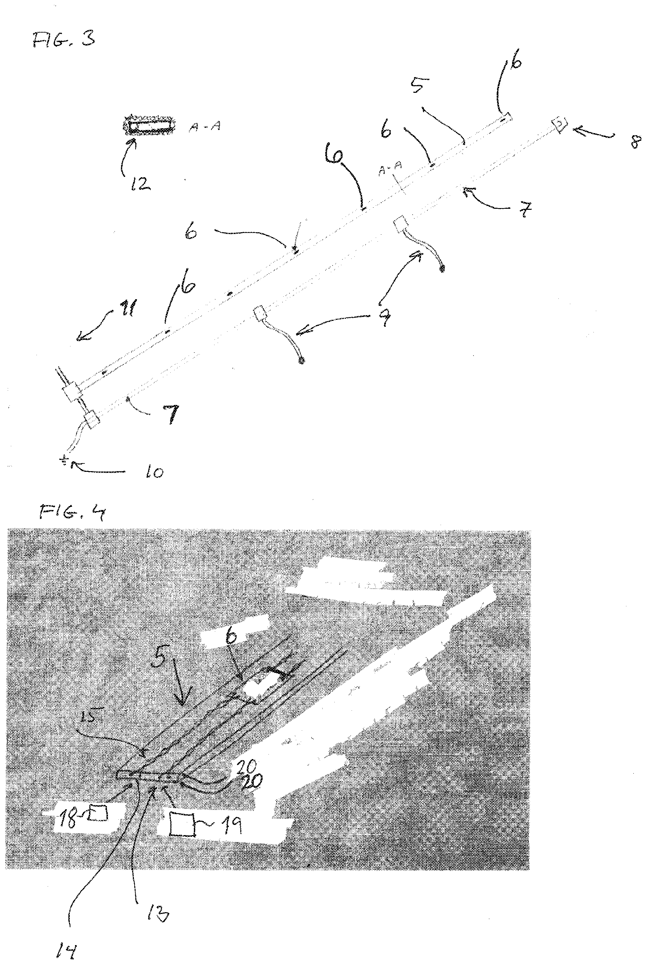

Figure 3 shows a preferred embodiment of the sensor set 5 mounting in the blade 1. The sensor set 5 comprises a series of sensors 6 located at intervals along the length of the sensor set. The sensors 6 may comprise one or more accelerometers, one or more gyros, and/or one or more magnetic field sensors, possibly supplemented with sensors for the measurement of temperature, pressure, etc.

The sensor set 5 is located roughly in parallel to a lightning conductor 7 of the blade 1. At a tip end 16 (see Fig. 2) of the blade the lightning conductor is connected to a tip receptor 8. Moving inboards towards the hub 2, the lightning conductor 7 has a number of inboard receptors 9. At the hub 2 the lightning conductor is connected to an earth connection 10. At its hub end, the sensor set 5 is connected to a bus 11 which provides both the power supply for the sensors 6 and the data connection for the signals recorded by the sensors 6.

The sensors 6 are via the bus 11 connected to a control unit 17 (see Fig. 1) being part of a control system for effecting a control action based on signals from the sensors 6.

The sensor set may preferably be covered with a braided screen 12.

Figure 4 shows a detailed view of a sensor 6 located in the sensor set 5. The sensor is provided with a power supply 19 through a set of twisted wires 13, and it is connected to a data collection system through another set of twisted wires 14.

The sensor set is totally encapsulated in a fiberglass strip 15 to protect the sensors against the environment. The braided screen 12 is not shown in Figure 4. The fiberglass strip may have a cross section being 3x15 mm.

The fiberglass strip is in the embodiment illustrated provided in two layers 20 of glass fiber being pultruded with armored wires and sensors.

The sensor set 5 may be mounted inside the blade 1 either during manufacturing or as a retrofit.

In a preferred embodiment the sensors 6 are placed at predefined, equidistant intervals along the longitudinal axis of the sensor set 5. As a consequence, the sensors will be located at different radial intervals along the longitudinal axis of the blade 1.

The sensor set may be manufactured in a continuous, automated process as endless strips of sensors fitted with the power supply leads and the data transmission leads, encapsulated in a suitable cover to protect against the environment, and further encapsulated in a braided screen.

## Claims

1. Wind turbine blade deflection monitoring system comprising two or more sensors (6) mounted in the wind turbine blade, **characterized in that** the sensors are located at different radial positions along the blade, that each sensor comprises an accelerometer and/or a magnetic transducer in addition to any other transducers included in the sensor, that the sensors are provided with connectors, that the sensors and their connectors are jointly encapsulated in a joint encapsulation and that the sensors, their connectors and their joint encapsulation are covered with a metallic shield, and wherein the set of sensors (5) are combined with a set of electrical conductors being connected to the connectors of the sensors to form a long strip or belt of roughly uniform width.

2. Wind turbine blade deflection monitoring system according to claim 1, **characterized in that** the sensors furthermore comprises sensors for the measurement of at least temperature, pressure.

3. Wind turbine blade deflection monitoring system according to any one of the preceding claims, **characterized in that** the individual sensors are manufactured as integrated units.

4. Wind turbine blade deflection monitoring system according to any one of the preceding claims 1-3, **characterized in that** the conductors are in the form of a twisted pair of power supply leads and a twisted pair of signal transmission leads.

5. Wind turbine blade deflection monitoring system according to any one of the preceding claims, **characterized in that** the sensors are mounted in a common housing which is fitted with leads that are readily connected to single conductors.

6. Wind turbine blade deflection monitoring system according to any one of the preceding claims 1-5, **characterized in that** the set of sensors and its conductors are encapsulated in a protective cover.

7. Wind turbine blade deflection monitoring system according to any one or more of the preceding claims, **characterized in** further being configured to combine the estimate of the variations around an average deflection based on the sensors with an estimated average value of the blade deflection based on wind speed and/or power output, blade pitch angle, rotor speed and to yield an estimate of the absolute blade deflection.

8. Wind turbine blade deflection monitoring system according to any one or more of the preceding claims, **characterized in that** sensors are accelerometers.

9. Wind turbine blade deflection monitoring system according to any one or more of the preceding claims, **characterized in that** the sensors are placed at predefined equidistant intervals along the longitudinal axis of the sensor set.

10. A method for the monitoring of wind turbine blade deflection, **characterized in that** it comprises the steps of
estimating the variations around the average wind turbine blade deflection based on the signals from a set of sensors installed in the wind turbine blade,
estimating the average wind turbine blade deflection from calculations based on a combination of two or more of the measured values of wind speed, power output, blade pitch angle, rotor speed and/or orientation of the rotor relative to the wind direction, and
estimating the absolute value of the blade deflection by adding the estimate of the variations around the average wind turbine blade deflection with the estimate of the average wind turbine blade deflection.

11. A method for the monitoring of wind turbine blade deflection according to claim 10, **characterized in** a further step of converting the acceleration signals by double integration to provide position information.

12. A method for the monitoring of wind turbine blade deflection according to claim 10 or 11, **characterized in** a further step of comparing the estimated absolute blade deflection to the desired operating envelope in which a tower strike and/or excessive strains in the blade will not occur.

13. Wind turbine control system configured to deliver a control action to a wind turbine generator if the wind turbine blade deflection according to any one or more of claims 10 to 12 approaches the edge of an operating envelope.

14. Wind turbine control system according to claim 13, **characterized in that** the sensor signals are provided according to any one or more of claims 1 to 9.

## Patentansprüche

1. System zur Überwachung von Windturbinenschaufeldurchbiegung, umfassend zwei oder mehrere Sensoren (6), die in der Windturbinenschaufel montiert sind, **dadurch gekennzeichnet, dass** die Sensoren an verschiedenen radialen Positionen entlang der Schaufel angeordnet sind, dass jeder Sensor einen Beschleunigungsmesser und/oder einen magnetischen Wandler zusätzlich zu allen anderen in dem Sensor beinhalteten Wandlern umfasst, dass die Sensoren mit Verbindern bereitgestellt sind, dass die Sensoren und ihre Verbinder gemeinsam in einer gemeinsamen Verkapselung eingekapselt sind und dass die Sensoren, ihre Verbinder und ihre gemeinsame Verkapselung mit einer metallischen Abschirmung bedeckt sind, und wobei der Satz von Sensoren (5) mit einem Satz von elektrischen Leitern kombiniert ist, die mit den Verbindern der Sensoren verbunden sind, um einen langen Streifen oder ein Band von ungefähr gleichmäßiger Breite zu bilden.

2. System zur Überwachung von Windturbinenschaufeldurchbiegung nach Anspruch 1, **dadurch gekennzeichnet, dass** die Sensoren ferner Sensoren zur Messung von mindestens Temperatur, Druck umfassen.

3. System zur Überwachung von Windturbinenschaufeldurchbiegung nach einem der vorhergehenden Ansprüche, **dadurch gekennzeichnet, dass** die einzelnen Sensoren als integrierte Einheiten hergestellt sind.

4. System zur Überwachung von Windturbinenschaufeldurchbiegung nach einem der vorhergehenden Ansprüche 1-3, **dadurch gekennzeichnet, dass** die Leiter die Form eines verdrillten Paares von Stromversorgungsleitungen und eines verdrillten Paares von Signalübertragungsleitungen aufweisen.

5. System zur Überwachung von Windturbinenschaufeldurchbiegung nach einem der vorhergehenden Ansprüche, **dadurch gekennzeichnet, dass** die Sensoren in einem gemeinsamen Gehäuse montiert sind, das mit Leitungen ausgestattet ist, die leicht mit Einzelleitern verbunden werden können.

6. System zur Überwachung von Windturbinenschaufeldurchbiegung nach einem der vorhergehenden Ansprüche 1-5, **dadurch gekennzeichnet, dass** der Satz von Sensoren und seine Leiter in einer Schutzhülle eingekapselt sind.

7. System zur Überwachung von Windturbinenschaufeldurchbiegung nach einem oder mehreren der vorhergehenden Ansprüche, **dadurch gekennzeichnet, dass** es zusätzlich dazu konfiguriert ist, die Schätzung der Schwankungen um eine durchschnittliche Durchbiegung, die auf den Sensoren basiert, mit einem geschätzten Durchschnittswert der Schaufeldurchbiegung zu kombinieren, der auf der Windgeschwindigkeit und/oder der Leistungsabgabe, dem Schaufelanstellwinkel und der Rotordrehzahl basiert, und so eine Schätzung der absoluten Schaufeldurchbierung ergibt.

8. System zur Überwachung von Windturbinenschaufeldurchbiegung nach einem oder mehreren der vorhergehenden Ansprüche, **dadurch gekennzeichnet, dass** die Sensoren Beschleunigungsmesser sind.

9. System zur Überwachung von Windturbinenschaufeldurchbiegung nach einem oder mehreren der vorhergehenden Ansprüche, **dadurch gekennzeichnet, dass** die Sensoren in vordefinierten äquidistanten Abständen entlang der Längsachse des Sensorsatzes platziert sind.

10. Verfahren zur Überwachung von Windturbinenschaufeldurchbiegung, **dadurch gekennzeichnet, dass** es die folgenden Schritte umfasst:
Abschätzen der Abweichungen um die durchschnittliche Windturbinenschaufeldurchbiegung basierend auf den Signalen eines Satzes von Sensoren, die in den Windturbinenschaufeln installiert sind,
Abschätzen der durchschnittlichen Windturbinenschaufeldurchbiegung anhand von Berechnungen, die auf einer Kombination von zwei oder mehreren der gemessenen Werte von Windgeschwindigkeit, Leistungsabgabe, Schaufelanstellwinkel, Rotordrehzahl und/oder Ausrichtung des Rotors relativ zur Windrichtung basieren, und
Schätzen des absoluten Werts der Schaufeldurchbiegung durch Addieren der Schätzung der Abweichungen um die durchschnittliche Windturbinenschaufeldurchbiegung mit der Schätzung der durchschnittlichen Windturbinenschaufeldurchbiegung.

11. Verfahren zur Überwachung von Windturbinenschaufeldurchbiegung nach Anspruch 10, **gekennzeichnet durch** einen weiteren Schritt des Umwandelns der Beschleunigungssignale durch doppelte Integration zum Bereitstellen von Positionsinformationen.

12. Verfahren zur Überwachung von Windturbinenschaufeldurchbiegung nach Anspruch 10 oder 11, **gekennzeichnet durch** einen weiteren Schritt des Vergleichens der geschätzten absoluten Schaufeldurchbiegung mit dem gewünschten Betriebsbereich, in dem es nicht zu einem Zusammenstoß mit dem Mast und/oder übermäßigen Belastungen der Schaufel kommt.

13. Windturbinensteuersystem, das dazu konfiguriert ist, eine Steueraktion an einen Windturbinengenerator auszulösen, wenn sich die Windturbinenschaufeldurchbiegung nach einem oder mehreren der Ansprüche 10 bis 12 dem Rand eines Betriebsbereichs nähert.

14. Windturbinensteuersystem nach Anspruch 13, **dadurch gekennzeichnet, dass** die Sensorsignale nach einem oder mehreren der Ansprüche 1 bis 9 bereitgestellt werden.

## Revendications

1. Système de surveillance de déplacement de pale d'éolienne comprenant deux capteurs (6) ou plus montés dans la pale d'éolienne, **caractérisé en ce que** les capteurs sont situés à différentes positions radiales le long de la pale, **en ce que** chaque capteur comprend un accéléromètre et/ou un transducteur magnétique en plus de tout autre transducteur inclus dans le capteur, **en ce que** les capteurs sont pourvus de connecteurs, **en ce que** les capteurs et leurs connecteurs sont conjointement encapsulés dans une encapsulation commune et **en ce que** les capteurs, leurs connecteurs et leur encapsulation commune sont recouverts d'un blindage métallique, et dans lequel l'ensemble de capteurs (5) sont combinés avec un ensemble de conducteurs électriques connectés aux connecteurs des capteurs pour former une longue bande ou ceinture de largeur à peu près uniforme.

2. Système de surveillance de déplacement de pale d'éolienne selon la revendication 1, **caractérisé en ce que** les capteurs comprennent en outre des capteurs pour la mesure d'au moins la température, la pression.

3. Système de surveillance de déplacement de pale d'éolienne selon l'une des revendications précédentes, **caractérisé en ce que** les capteurs individuels sont fabriqués sous forme d'unités intégrées.

4. Système de surveillance de déplacement de pale d'éolienne selon l'une quelconque des revendications précédentes 1 à 3, **caractérisé en ce que** les conducteurs se présentent sous la forme d'une paire torsadée de fils d'alimentation et d'une paire torsadée de fils de transmission de signaux.

5. Système de surveillance de déplacement de pale d'éolienne selon l'une quelconque des revendications précédentes, **caractérisé en ce que** les capteurs sont montés dans un boîtier commun qui est équipé de câbles qui se connectent facilement à des conducteurs uniques.

6. Système de surveillance de déplacement de pale d'éolienne selon l'une quelconque des revendications 1 à 5 précédentes, **caractérisé en ce que** l'ensemble de capteurs et ses conducteurs sont encapsulés dans un capot de protection.

7. Système de surveillance de déplacement de pale d'éolienne selon l'une quelconque ou plusieurs des revendications précédentes, **caractérisé en ce qu'**il est en outre configuré pour combiner l'estimation des variations autour d'un déplacement moyen sur la base des capteurs avec une valeur moyenne estimée du déplacement de pale sur la base de la vitesse du vent et/ou de la puissance de sortie, de l'angle d'inclinaison de pale, de la vitesse de rotor et pour donner une estimation du déplacement de pale absolu.

8. Système de surveillance de déplacement de pale d'éolienne selon l'une quelconque ou plusieurs des revendications précédentes, **caractérisé en ce que** les capteurs sont des accéléromètres.

9. Système de surveillance de déplacement de pale d'éolienne selon l'une quelconque ou plusieurs des revendications précédentes, **caractérisé en ce que** les capteurs sont placés à des intervalles équidistants prédéfinis le long de l'axe longitudinal de l'ensemble de capteurs.

10. Procédé de surveillance de déplacement de pale d'éolienne, **caractérisé en ce qu'**il comprend les étapes
d'estimation des variations autour du déplacement de pale d'éolienne moyen sur la base des signaux issus d'un ensemble de capteurs installés dans la pale d'éolienne,
d'estimation du déplacement de pale d'éolienne moyen à partir de calculs sur la base d'une combinaison de deux ou plus des valeurs mesurées de vitesse du vent, de puissance de sortie, d'angle d'inclinaison de pale, de vitesse de rotor et/ou d'orientation du rotor par rapport à la direction du vent, et
d'estimation de la valeur absolue du déplacement de pale en ajoutant l'estimation des variations autour du déplacement de pale d'éolienne moyen à l'estimation du déplacement de pale d'éolienne moyen.

11. Procédé de surveillance de déplacement de pale d'éolienne selon la revendication 10, **caractérisé par** une étape supplémentaire de conversion des signaux d'accélération par double intégration pour fournir des informations de position.

12. Procédé de surveillance de déplacement de pale d'éolienne selon la revendication 10 ou 11, **caractérisé par** une étape supplémentaire de comparaison du déplacement de pale absolu estimé à l'enveloppe de fonctionnement souhaitée dans laquelle une collision avec la tour et/ou des contraintes excessives dans la pale ne se produiront pas.

13. Système de commande d'éolienne configuré pour délivrer une action de commande à un générateur d'éolienne si le déplacement de pale d'éolienne selon l'une quelconque ou plusieurs des revendications 10 à 12 s'approche du bord d'une enveloppe de fonctionnement.

14. Système de commande d'éolienne selon la revendication 13, **caractérisé en ce que** les signaux de capteur sont fournis selon l'une quelconque ou plusieurs des revendications 1 à 9.
